# EUROPÄISCHE PATENTSCHRIFT

(11) **EP 3 398 842 B1**
(45) Veröffentlichungstag und Bekanntmachung des Hinweises auf die Patenterteilung: **28.10.2020**
(21) Anmeldenummer: 17169457.3
(22) Anmeldetag: 04.05.2017
(51) Int. Cl.: B62D 53/08, B60D 1/145

(54) **DOLLY FÜR SATTELAUFLIEGER**
DOLLY FOR SEMITRAILERS
DIABOLO POUR SYSTÈME DE SUPPORT DE SELLE

(43) Veröffentlichungstag der Anmeldung: 07.11.2018
(73) Patentinhaber: Fliegl, Helmut, 07819 Triptis (DE)
(72) Erfinder: Fliegl, Helmut, 07819 Triptis (DE)
(74) Vertreter: Kramer Barske Schmidtchen Patentanwälte PartG mbB

(56) Entgegenhaltungen:
- EP-A1- 2 634 018
- US-A- 2 254 532
- US-A- 3 526 289
- US-A- 3 752 502
- US-A- 4 397 474
- US-A- 5 037 121
- US-A- 5 348 332

## Beschreibung

### Technisches Gebiet

Die vorliegende Erfindung betrifft allgemein sogenannte Untersetzachsen, die auch als Dollys bezeichnet werden. Dollys bzw. Untersetzachsen dienen dazu, Sattelauflieger mit Zugfahrzeugen zu koppeln, die selbst nicht über Sattelkupplungsplatten verfügen. Insbesondere betrifft die vorliegende Erfindung Dollys mit einer oder mehreren Starrachsen und einer auf der Oberseite des Rahmens angeordneten Sattelkupplungsplatte zum Aufsatteln bzw. Koppeln eines Sattelaufliegers.

Außerdem betrifft die Erfindung eine spezielle Zugstange, die zur Kopplung eines erfindungsgemäßen Dollys mit einem Zugfahrzeug ausgebildet ist.

Schließlich bezieht sich die vorliegende Erfindung auch auf ein zur drehstarren Kopplung mit einer solchen Zugstange ausgerüstetes Zugfahrzeug wie z.B. ein Lastkraftwagen oder ein Fahrzeuganhänger.

### Hintergrund

Wie zuvor bereits kurz erläutert, ist es mit Hilfe von Dollys bzw. Untersetzachsen möglich, Sattelauflieger, d.h. Fahrzeuganhänger, die mittels einer Sattelkupplung mit einem Zugfahrzeug gekoppelt werden, auch an Lastkraftwagen mit Nutzfahrzeugaufbau oder Nutzfahrzeuganhängern, die selbst keine Sattelkupplungsplatte haben, anzuhängen. Auf diese Weise können kostengünstige längere Nutzfahrzeugkombinationen wie EuroCombi, RoadTrain, LZV oder LCV mit Anhängern ohne großen Aufwand mit herkömmlichen Sattelaufliegern zusammengestellt werden, wie sie beispielsweise in USA, Australien, Russland, Finnland, Schweden und Deutschland zum Einsatz kommen.

Grundsätzlich unterscheidet man zwischen Dollys mit Starrachsen und solchen mit lenkbaren Achsen. Für alle Dolly-Bauarten ist es zwingend notwendig, dass im Betrieb des Dollys das Fahrzeuggespann einen sogenannten BOKraft-Kreis nach § 32d StVZO der Bundesrepublik Deutschland einhalten kann. Um diesen Anforderungen zu genügen, sind bisher entweder die DollyAchsen oder die Deichsel des Dollys lenkbar. Ähnliche gesetzliche Regelungen gibt es auch in anderen Ländern.

Ein Dolly mit lenkbarer Achse ist beispielsweise aus der DE 203 05 794 U1 bekannt. Der hierin offenbarte Dolly soll dazu ausgebildet sein, einen möglichst kleinen Wendekreis eines Lastzugs zu ermöglichen. Dazu weist der bekannte Dolly mindestens einen lenkbaren Radsatz und eine Zugdeichsel auf, die um eine vertikale Drehachse drehbeweglich am Rahmen befestigt ist. Die Drehbewegungen der Zugdeichsel werden mit Hilfe von mechanischen Übertragungsmitteln auf Lenkhebel übertragen, die wiederum auf den lenkbaren Radsatz wirken.

Auch die DE 10 2006 044 202 A1 zeigt einen Dolly mit mindestens einem lenkbaren Radsatz auf. Hier ist die Lage eines Schaltlenkers durch angetriebene Stellmittel veränderbar.

Ein sehr ähnlicher Dolly mit lenkbarem Radsatz ist aus der DE 10 2006 044 203 A1 bekannt. In Ergänzung zu dem zuvor erläuterten Dolly ist hier eine drehbar gelagerte Sattelplatte mit integrierten Rotationsanschlägen vorhanden.

Aus der DE 20 2006 015 113 U1 ist ein Dolly bekannt, bei dem die Schwenkachse der Zugdeichsel in Vorwärtsfahrtrichtung vor der lenkbaren Radachse liegt.

Der Dolly gemäß der DE 20 2007 018 853 U1 weist eine Rückfahrsperre auf, die eine mit der Zugdeichsel verbindbare, federbelastete Rückfahrsperrklaue umfasst, die mit der Zugdeichsel verriegelbar und entriegelbar ist.

Aus der DE 10 2006 044 204 A1 ist eine Dolly-Achse bekannt, bei der die Zugdeichsel über zumindest einen Dämpfer an dem Rahmen abstützbar ist.

Die DE 10 2007 018 445 A1 offenbart ein Fahrzeug mit einem Dolly, der einen ersten Rahmen und wenigstens zwei gegenüber dem ersten Rahmen lenkbare Räder aufweist. Weiterhin ist bei dem Fahrzeug mit Dolly eine Bremsvorrichtung vorgesehen, die die auf die Räder des Dollys wirkende Bremskraft für jede Seite des Fahrzeugs in Abhängigkeit von einer geplanten Fahrtrichtungsänderung separat steuert.

Des Weiteren ist ein Dolly, bei dem wenigstens einige Räder von wenigstens einem Raupenband umschlungen sind, aus der EP 2 181 915 A1 bekannt.

Ein Dolly für einen Sattelzug, bei dem wenigstens eine Achse als Nachlauflenkachse ausgebildet ist, ist in der DE 10 2008 063 660 A1 offenbart.

Weiterhin ist aus der DE 199 42 034 A1 eine Lenkvorrichtung für landwirtschaftliche Anhänger bekannt. Das Anhängegerät ist hinter einem Traktor mittels einer Knickdeichsel oder einer Achsschenkellenkdeichsel gelenkig an einem Zugmaul angehängt.

Aus der EP 2 145 813 A1 ist ein Verfahren und eine Vorrichtung zur Lenkung eines Anhängers bekannt. Der Anhänger umfasst eine starre und wenigstens eine lenkbare Achse. Die lenkbare Achse wird derart gesteuert, dass der Kurvenmittelpunkt des Anhängers auf der Verlängerung der starren Achse liegt.

Die EP 1 897 790 A1 zeigt einen Dolly, der durch ein lenkbares Radsatzpaar gekennzeichnet ist. Dieses lenkbare Radsatzpaar ist mit einer schwenk- bzw. drehbaren Deichsel zwangsgekoppelt, um entsprechend der Auslenkung der Deichsel gelenkt zu werden. Nur über diese Zwangskopplung wird überhaupt eine Lenkung des Dollys in eine bestimmte Richtung geleistet.

Alle vorgenannten Dollys bzw. Untersetzachsen weisen einen oder mehrere lenkbare Radsätze bzw. Achsen auf. Aufgrund der dadurch notwendigen Vielzahl an beweglichen Bauteilen sind derartige Dollys schwer, technisch aufwändig und teuer.

Die US 3,752,502 A zeigt einen Dolly mit einer Zugstange, die am Dolly-Rahmen einzig um eine horizontale Drehachse drehbar gelagert ist.

Die US 5,037,121 A zeigt lediglich einen Dolly mit einer Zugdeichsel, die drehstarr am Dollyrahmen angebracht ist. Das Vorderende der Zugdeichsel ist mit einer Zugöse zum Einhängen in ein Kupplungsmaul einer Maulkupplung versehen. Entsprechend ist eine vertikale Drehachse für die Zugdeichsel am Zugfahrzeug geschaffen.

Die US 2,254,532 A offenbart wiederum lediglich einen Dolly, dessen Zugdeichsel einzig um eine horizontale Drehachse am Dollyrahmen gelagert ist. Auch hier ist in bekannter Weise das Vorderende der Zugdeichsel mit einer Zugöse zum Einhängen in ein Kupplungsmaul einer Maulkupplung versehen. Entsprechend ist wiederum eine vertikale Drehachse für die Zugdeichsel am Zugfahrzeug geschaffen.

Die US 5,348,332 A zeigt einen Dolly mit drehstarr am Dollyrahmen ausgebildeter Zugdeichsel. Wie bei den vorstehend genannten Dollys ist das Vorderende der Zugdeichsel mit einer Zugöse zum Einhängen in ein Kupplungsmaul einer Maulkupplung versehen. Entsprechend ist wiederum eine vertikale Drehachse für die Zugdeichsel am Zugfahrzeug geschaffen.

In der US 4,397,474 A ist ein Dolly mit lenkbaren Achsen ("steerable wheeled dolly") gezeigt, bei dem ein Verbindungselement zum Zugfahrzeug schwenkbar gelagert ist. Dieses Verbindungselement umfasst einen Königszapfen auf der Ober- und Unterseite, um mit einem entsprechendes Aufnahmeteil ("cutter assembly") gekoppelt zu werden. Somit ist hierin eine Lenkung der Achsen vorgesehen und der Verbindungsmechanismus zum Zugfahrzeug ist relativ kompliziert.

Schließlich zeigt die US 3,526,289 A einen aufwändig konstruierten Dolly mit Seilkopplung.

Ein Dolly mit Starrachsen ist aus der EP 2 634 018 A1 bekannt. Hier ist eine Deichsel drehbar, aber fest am Dollyrahmen angebracht. Mindestens eine Stelleinheit ist dazu ausgebildet, einen berechneten Deichsel-Sollwinkel während der Fahrt fortlaufend einzustellen. Ein Dolly mit Starrachsen kann zwar leichter und kostengünstiger gefertigt werden als ein Dolly mit lenkbaren Achsen, aber, um die notwendige Lenkbarkeit des Dollys zu erzielen, ist die Deichsel drehbar gelagert und die zugehörige mechanische Stelleinheit zwingend notwendig. Erst durch diese Zwangssteuerung der beweglich gelagerten Deichsel ist eine "Lenkbarkeit" des Dollys gegeben und die Einhaltung des BO-Kraftkreises möglich.

Ein der Erfindung zugrunde liegendes technisches Problem besteht darin, Dollys mit einer oder mehreren Starrachsen weiter zu verbessern, insbesondere technisch weniger aufwändig und leichter zu konstruieren.

### Darstellung der Erfindung

Das der Erfindung zugrunde liegende technische Problem wird gemäß einem ersten Aspekt durch eine Untersetzachse gelöst, die einen Rahmen umfasst, der eine zu einem Zugfahrzeug zum Ziehen der Untersetzachse gerichtete Vorderseite und eine Oberseite aufweist. An der Oberseite des Rahmens ist eine Sattelkupplungsplatte einer Sattelkupplung zum lösbaren Koppeln eines Sattelaufliegers vorhanden. Alle Achsen des Dollys, also bei einachsigen Dollys eine, bei mehrachsigen Dolly alle Achsen, sind als Starrachsen, also nicht lenkbar, am Rahmen angeordnet. Ferner ist an der Vorderseite des Rahmens eine Zugstange in Bezug auf eine vertikale Achse drehbar gelagert. Die Zugstange selbst ist an der zum Koppeln mit einem Zugfahrzeug bestimmten Vorderseite derart ausgebildet, dass eine drehfeste Kopplung mit dem Zugfahrzeug erfolgt. Die Zugstange kann in dieser beispielhaften Ausführungsform eines erfindungsgemäßen Dollys von solch einer Bauart sein, die nur mit Werkzeug vom Rahmen des Dollys demontierbar ist.

Gemäß einem weiteren Aspekt der Erfindung ist die am Zugfahrzeug drehstarr befestigte Zugstange am Dollyrahmen abnehmbar befestigt. Folglich wird das der Erfindung zugrunde liegende technische Problem gemäß einem weiteren Aspekt durch eine Untersetzachse gelöst, die einen Rahmen umfasst, der eine zu einem Zugfahrzeug zum Ziehen der Untersetzachse gerichtete Vorderseite und eine Oberseite aufweist. An der Oberseite des Rahmens ist eine Sattelkupplungsplatte einer Sattelkupplung zum lösbaren Koppeln eines Sattelaufliegers vorhanden. Mindestens eine Starrachse mit Rädern ist starr, nicht lenkbar am Rahmen angeordnet. Ferner ist an der Vorderseite des Rahmens eine Kupplungskomponente einer Maulkupplung angeordnet. Diese Kupplungskomponente schafft in Verbindung mit einer an einer Zugstange befindlichen komplementären Kupplungskomponente der Maulkupplung eine vertikale Drehachse für die Zugstange an dem Dolly. Hiermit wird auf einfache und technisch robuste Weise eine Drehlagerung der Zugstange am Dollyrahmen um eine vertikale Drehachse geschaffen.

Der vorliegenden Erfindung liegt der Gedanke zugrunde, erstmals die für die "Lenkbarkeit" notwendige Kinematik vollkommen neu zu gestalten. Bisher waren alle Dollys, egal welcher Bauart, über eine Deichsel bzw. Zugholm am Zugfahrzeug gelenkig, d.h. drehbar über eine am Zugfahrzeug angeordnete Maulkupplung mit dem Zugfahrzeug gekoppelt. Aufgrund dieser Ausgangssituation mussten die Deichseln selbst und/oder die Achsen gelenkt werden. Erfindungsgemäß wird aber nun die Deichsel starr am Zugfahrzeug und gelenkig am Dolly gelagert. Durch diese Art "Kinematikumkehr" kann nun der Drehpunkt nahe an die Starrachsen des Dollys gebracht werden, ohne dass die starr am Zugfahrzeug angebrachte Zugstange gegenüber dem Dollyrahmen mechanisch verstellt werden muss, wie es bei dem Dolly gemäß der genannten EP 2 634 018 A1 der Fall ist. Durch die vorliegende Erfindung ist es erstmals möglich, einen Dolly mit einer oder mehreren Starrachsen auch ohne die relativ aufwändige Stelleinheit gemäß der EP 2 634 018 A1 zu bauen und gleichzeitig die für die Einhaltung des BO-Kraftkreises notwendige Kinematik zu erzielen. Dadurch kann ein erfindungsgemäßer Dolly technisch einfacher, kostengünstiger und leichter sein.

Mit anderen Worten: Die bisher immer an einem mit Starrachse(n) ausgestattetem Dolly vorhandene Deichsel, ob drehstarr oder lenkbar, wird erstmals ersetzt durch eine Zugstange, die am Dolly dreh- und vorzugsweise auch lösbar anbringbar ist. Dadurch wird zum einen eine mechanisch sehr robuste Einheit geschaffen, zum anderen ist dadurch auch eine erhebliche Gewichtsreduzierung erreichbar. So können im Vergleich zu auf dem Markt verfügbaren Dollys Gewichtseinsparungen von mehreren hundert Kilogramm erreicht werden. Vergleichbare marktübliche Dollys können um 20-30% schwerer sein als ein erfindungsgemäßes Dolly. Hervorzuheben ist, dass sich mit jedem Kilogramm, um das das Dolly leichter ist, die Nutzlast entsprechend erhöht, was für Betreiber von Zuggespannen mit Dollys aufgrund der gesteigerten Wirtschaftlichkeit äußerst interessant ist. Durch den technisch einfachen Aufbau muss ein erfindungsgemäßer Dolly wohl auch weniger oft einer Wartung unterzogen werden, was wiederum die Betriebskosten senkt.

Gemäß einer beispielhaften Ausführungsform der vorliegenden Erfindung beträgt der Abstand zwischen dem Mittelpunkt der Starrachsen und dem Drehpunkt der Zugstange an der Vorderseite des Dollyrahmens zwischen 500 mm und 2.500 mm, insbesondere 800 mm bis 1.500 mm, oder weiter insbesondere 900 mm bis 1.300 mm. Alternativ oder zusätzlich ist der Abstand zwischen der Sattelkupplungsplatte auf der Oberseite des Dollyrahmens und dem Drehpunkt der Zugstange an der Vorderseite des Dollyrahmens zwischen 500 mm und 2.500 mm, insbesondere 800 mm bis 1.500 mm, oder weiter insbesondere 900 mm bis 1.300 mm.

Gemäß einer weiteren beispielhaften Ausführungsform der vorliegenden Erfindung handelt es sich bei der Maulkupplung um eine selbstschließende Maulkupplung mit Kupplungsmaul und Kupplungsauge. Je nach Ausgestaltung ist entweder das Kupplungsmaul oder das Kupplungsauge an der Vorderseite des Rahmens des Dollys angebracht. Damit wird eine kostengünstige und technisch einfache wie robuste Drehlagerung einer abnehmbaren Zugstange geschaffen, die an einem Zugfahrzeug drehstarr anzubringen ist. Beispielsweise ist also an der Vorderseite des Rahmens des Dollys ein Kupplungsmaul vorhanden, das in Verbindung mit einem an einer Zugstange befindlichen Kupplungsauge eine Drehachse für die Zugstange an der Untersetzachse schafft. Bei einer alternativen beispielhaften Ausführungsform der vorliegenden Erfindung ist an der Vorderseite des Rahmens des Dolly ein Kupplungsauge vorhanden, das in Verbindung mit einem an einer Zugstange befindlichen Kupplungsmaul eine Drehachse für die Zugstange an der Untersetzachse schafft. Beide Ausführungsformen haben gemein, dass erstmals bei einem Starrachsen-Dolly eine Lenk- bzw. Drehachse auf einfache Weise geschaffen wird, ohne dass eine Deichsel oder Zugstange aufwändig dreh- bzw. lenkbar am Dollyrahmen mittels eigens dafür bestimmter Lager gelagert werden muss. Auch eine Lenkbarkeit der Dollyachsen ist nicht notwendig.

Bei einer weiteren beispielhaften Ausführungsform der vorliegenden Erfindung ist eine Feststelleinrichtung vorhanden, die derart ausgebildet ist, dass eine Zugstange, die in die am Rahmen der Untersetzachse angeordneten Maulkupplungskomponente der Maulkupplung gekoppelt ist, in Bezug auf eine vertikale Achse lösbar, aber drehstarr zum Rahmen der Untersetzachse festlegbar ist. Damit ist die ansonsten drehbar am Dolly angebrachte Zugstange zum Rangieren des Dollys auf einfache Art und Weise vorübergehend drehstarr zum Rahmen des Dollys festlegbar. Vorzugsweise handelt es sich bei der Feststelleinrichtung um mindestens eine Stange, die mit dem Dollyrahmen und der Zugstange lösbar verbindbar ist.

Das der Erfindung zugrunde liegende technische Problem wird gemäß einem weiteren Aspekt durch eine Zugstange zum lösbaren Koppeln einer Untersetzachse der zuvor erläuterten Art mit einem Zugfahrzeug gelöst, die einen länglichen Zugstangenkörper, der eine zum Zugfahrzeug zu richtende Vorderseite und eine zur Untersetzachse zu richtende Rückseite aufweist. An der Rückseite des Zugstangenkörpers ist eine Maulkupplungskomponente, also entweder ein Kupplungsauge oder ein Kupplungsmaul, angeordnet. Eine erfindungsgemäße Zugstange ersetzt die bisher vorhandene starre oder drehbeweglich gelagerte Deichsel eines Dollys. Tatsächlich ist es erfindungsgemäß nur notwendig, dass die auf einfache Art und Weise koppelbare Zugstange gegenüber einer Längsachse des Zugfahrzeugs mittels einer Führungseinrichtung starr geführt ist. Eine Beweglichkeit in vertikaler Richtung gegenüber dem Zugfahrzeug kann zugelassen werden. Entsprechend kann die erfindungsgemäße Zugstange eine bei üblichen Anhängern bekannte höhenbewegliche Deichsel, die keine vertikalen Kräfte überträgt, ersetzen.

Bei einer beispielhaften Ausführungsform der vorliegenden Erfindung umfasst die Führungseinrichtung an der Zugstange mindestens eine Zinke, die bei Kopplung der Zugstange mit dem Zugfahrzeug mit einer komplementär ausgebildeten Aufnahmekammer am Zugfahrzeug derart zu paaren ist, dass die Zugstange drehstarr zum Zugfahrzeug geführt ist. Insbesondere kann es sich bei der Aufnahmekammer um eine oder zwei Hohlräume im Zugfahrzeug handeln, die zum Aufnehmen einer oder mehrerer Zinken eines Mitnahmestaplers bereits vorhanden sind. Alternativ ist es natürlich auch denkbar, dass die mindestens eine Zinke am Zugfahrzeug vorhanden ist und ein oder mehrere entsprechende Aufnahmekammern an der Zugstange vorhanden sind. Bei einer beispielhaften Ausführungsform ist die mindestens eine Zinke oder Aufnahmekammer an der Zugstange mittels einer nachrüstbaren Halterung befestigbar. Damit wird auf technische einfache und robuste Weise die Zugstange in Längsrichtung gesehen starr über das Heck des Zugfahrzeugs hinausstehend angeordnet und die zur Einhaltung eines BO-Kraftkreises nach der Straßenverkehrsordnung notwendige Lenkbarkeit durch die Drehverbindung, die beispielsweise durch die Maulkupplungskomponente gebildet ist, erzielt, ohne dass eine Deichsel aufwändig verstellbar und lenkbar am Dolly zu lagern ist oder das Dolly selbst lenkbare Achsen aufweisen muss.

Wie bereits zuvor erläutert, kann die Führungseinrichtung beispielsweise allgemein als Steckverbindung realisiert sein, die den Zugstangenkörper drehstarr an einer komplementären Steckverbindungskomponente am Zugfahrzeug aufnimmt. Grundsätzlich ist aber auch eine feste Schweißverbindung denkbar, die die Zugstange über das Heck des Zugfahrzeugs hinausstehend starr am Zugfahrzeug fixiert. Es ist darüber hinaus auch denkbar, in einem Ausführungsbeispiel der vorliegenden Erfindung eine Zugstange teleskopierbar auszugestalten, so dass deren Länge veränderbar ist. Bei einer alternativen Ausführungsform der vorliegenden Erfindung könnte die Zugstange auch zwei- oder mehrteilig sein, wobei ein Teil der Zugstange gegenüber einem benachbarten Zugstangenteil wegklappbar oder verschwenkbar gelagert ist.

Bei einer weiteren beispielhaften Ausführungsform einer erfindungsgemäßen Zugstange ist nicht nur an der Rückseite des Zugstangenkörpers sondern auch an dessen Vorderseite eine Kupplungskomponente einer Maulkupplung, also entweder ein Kupplungsmaul oder ein Kupplungsauge, angeordnet. Damit ist die Zugstange auf einfache und robuste Weise auch am Zugfahrzeug oder der Zugmaschine lösbar anbringbar. In diesem Fall ist vorzugsweise eine Führungseinrichtung am Zugfahrzeug oder allgemein der Zugmaschine vorhanden, die den Zugstangenkörper zumindest um eine vertikale Achse drehstarr führt.

Das der Erfindung zugrunde liegende technische Problem wird gemäß noch einem weiteren Aspekt durch ein Zugfahrzeug gelöst, das ein Chassis hat, das eine Vorderseite und eine Heckseite aufweist. An dem Chassis ist heckseitig eine Zugstange zum Koppeln mit einem erfindungsgemäßen Dolly vorhanden. Die Zugstange ist in Bezug auf eine vertikale Achse starr angeordnet.

Bei einer beispielhaften Ausführungsform eines erfindungsgemäßen Zugfahrzeugs ist heckseitig am Chassis eine Kupplungskomponente einer Maulkupplung vorhanden. Des Weiteren ist eine Führungseinrichtung vorhanden die derart ausgebildet ist, dass eine Zugstange in Bezug auf eine vertikale Achse drehstarr geführt ist. Und zwar obwohl die Zugstange mittels Maulkupplung - und damit eigentlich drehbar - an das Zugfahrzeug gekoppelt ist. Bei der an der Vorderseite der Zugstange angeordneten Maulkupplungskomponente handelt es sich entweder um ein Kupplungsmaul oder ein Kupplungsauge einer an sich bekannten Maulkupplung, als insbesondere einer selbstsichernden Maulkupplung.

Wie bereits einleitend erläutert, sind hier die Begriffe "Untersetzachse" und "Dolly" synonym verwendet und mit beiden Begriffen ist ein kurzer Anhänger umschrieben, der ein, zwei oder sogar drei Achsen aufweist. Die vorliegende Erfindung betrifft dabei Dollys mit Starrachse(n), d.h., die mindestens eine Achse ist nicht lenkbar und dementsprechend starr am Dollyrahmen angeordnet.

Eine Maulkupplung, wie sie hier zum Einsatz kommt, kann sowohl eine selbsttätige, automatische, als auch eine von Hand zu betätigende sein. Automatische oder selbsttätige Maulkupplungen sind selbstschließende Maulkupplungen, die - wie auch die per Hand zu bedienende Bauart - aus einem Kupplungsmaul, in dem ein Bolzen bewegbar ist, und einem Kupplungsauge besteht. Das Gegenstück an der Deichsel eines Anhängers ist das Kupplungsauge oder -öse. Der Kupplungsbolzen wird durch Schwenken eines Betätigungshebels in Richtung des LKW-Aufbaus angehoben und rastet in dieser Stellung ein. Wird dann die Öse der Anhängerdeichsel in das Kupplungsmaul geschoben, so fällt der Bolzen mit Federkraftunterstützung durch die Öse, rastet in dieser Stellung automatisch wieder ein und die Kupplung ist verbunden. Ob der Bolzen sicher eingerastet ist, kann z.B. durch einen sogenannten Taststift angezeigt werden. In verriegelter Stellung schließt sein Ende mit dem umgebenden Gehäuse eben ab. Ist die Kupplung noch nicht verriegelt, steht der Stift deutlich heraus. Als "Taststift" wird diese Vorrichtung bezeichnet, weil der Bediener auch in völliger Dunkelheit durch Abtasten mit der Hand eindeutig feststellen kann, ob die Kupplung eingerastet ist. Beim LKW gibt es zwei verschiedene Anhängerarten. Bei manuellen Maulkupplungen wird der Bolzen per Hand von oben durch das Kupplungsmaul und -öse gesteckt. Die Art von Maulkupplung ist zum Teil auch heute noch an Traktoren und im vorderen Bereich von LKWs zu finden. Maulkupplungen der hier vorliegenden Art werden auch als Bolzenkupplungen bezeichnet.

Zumindest in der Bundesrepublik Deutschland muss bei einem Fahrzeug, das ein Gesamtgewicht von 3,5 t übersteigt, aus Sicherheitsgründen eine Maulkupplung verwendet werden. Aufgrund der meist stärkeren Belastung, der eine Maulkupplung ausgesetzt ist, müssen spezielle Vorgaben erfüllt werden: Der Anhänger von großen Nutzfahrzeugen muss mit einer eigenen Bremse ausgestattet sein. Ansonsten müsste das Zugfahrzeug die erforderliche Bremsleistung, die mit steigendem Gewicht zunimmt, allein übernehmen. Verfügt der Anhänger über eine eigene Bremse, wird das Zugfahrzeug entlastet. Dies verbessert die Fahreigenschaften des gesamten Gespanns und schont die Bremsen des Zugfahrzeugs. Die Anschlüsse für die Bremsen befinden sich an der Maulkupplung und variieren je nach Baujahr: Ältere Bremssysteme besitzen ein Einleitungs-, neuere Systeme ein Zweileitungsbremssystem. Maulkupplungen der hier interessierenden Bauart können grundsätzlich gemäß dem einen oder dem anderen System ausgebildet sein.

Ferner ist anzumerken, dass hier der Begriff "Zugfahrzeug" nicht nur motorisierte Zugfahrzeug oder Zugmaschinen betrifft, sondern auch nicht motorisierte Fahrzeuganhänger, also sind unter "Zugfahrzeug" hier alle Arten von Fahrzeugen zu subsumieren, an denen ein Dolly der hier offenbarten Bauart angehängt werden kann.

Allgemein ist anzumerken, dass für die genannten Maße betreffend die Sattelkupplungsplatte der Mittelpunkt der Aufnahme für den Königszapfen in der Sattelkupplungsplatte heranzuziehen ist. Wenn ein Maß auf eine Maulkupplungskomponente bezogen ist, ist von dem Mittelpunkt des Bolzens in dem Kupplungsmaul oder der Mittelpunkt der Kupplungsöse auszugehen. Ansonsten ist der durch die Drehlagerung der Zugstange am Dollyrahmen vorgegebene Drehpunkt heranzuziehen. Ist der Mittelpunkt der Starrachsen ein maßgebender Punkt, so ist bei einem einachsigen Dolly damit die Drehachse der Starrachse gemeint. Bei einem zweiachsigen Dolly ist es der Mittelpunkt zwischen den beiden Drehachsen der Starrachse. Und bei einem dreiachsigen Dolly ist dieser Mittelpunkt die Drehachse der mittleren Starrachse des Dolly.

### Kurze Beschreibung der Zeichnungen

Nachfolgend werden einige beispielhafte Ausführungsformen der vorliegenden Erfindung anhand der beigefügten Zeichnungen näher beschrieben und erläutert. Es zeigen:
Fig. 1 eine schematische Seitenansicht einer Zugmaschine in Gestalt eines Lastkraftwagens mit erfindungsgemäßer Zugstangenhalterung und daran gekoppelter Untersetzachse gemäß der vorliegenden Erfindung,
Fig. 2 eine schematische Seitenansicht einer beispielhaften Ausführungsform eines Zuggespanns, das aus einem erfindungsgemäßen Zugfahrzeug, erfindungsgemäßer Zugstange und erfindungsgemäßen Dolly besteht,
Fig. 3 eine vergrößerte schematische Perspektivansicht einer Verbindung zwischen Zugfahrzeug und Dolly,
Fig. 4 eine schematische Perspektivansicht einer weiteren beispielhaften Ausführungsform eines Zuggespanns, das aus einem erfindungsgemäßen Zugfahrzeug, erfindungsgemäßer Zugstange und erfindungsgemäßen Dolly besteht,
Fig. 5 eine schematische Perspektivansicht einer Führungseinrichtung an einem erfindungsgemäßen Zugfahrzeug,
Fig. 6 eine schematische Perspektivansicht einer erfindungsgemäßen Zugstange,
Fig. 7 eine schematische Seitenansicht einer weiteren beispielhaften Ausführungsform eines Zuggespanns, das aus einem erfindungsgemäßen Zugfahrzeug, erfindungsgemäßer Zugstange und erfindungsgemäßen Dolly besteht.

### Detaillierte Beschreibung

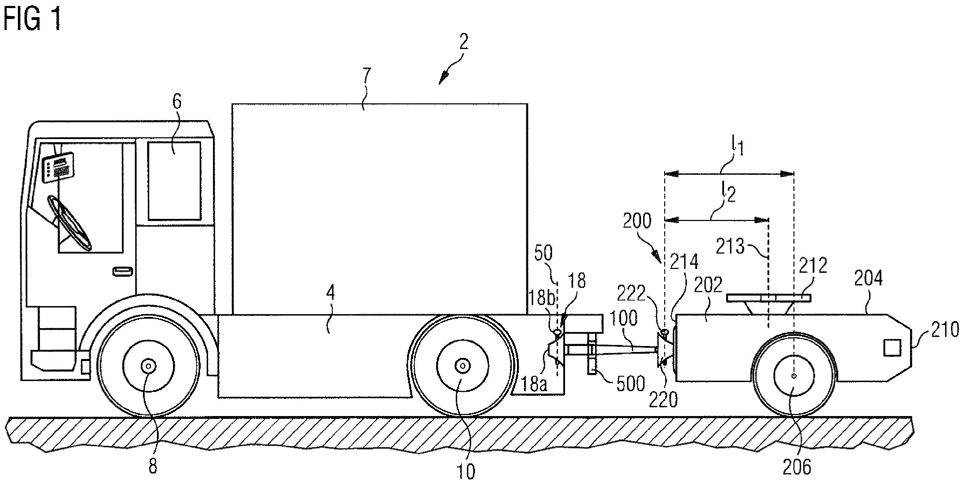

Die Fig. 1 zeigt eine erste beispielhafte Ausführungsform eines Zuggespanns gemäß der vorliegenden Erfindung. Dieses Zuggespann besteht aus einem Lastkraftwagen 2 und einem hiermit gekoppelten Dolly 200 mit einer Starrachse 206.

Der Lastkraftwagen 2 ist in üblicher Weise aufgebaut und umfasst hier ein Chassis 4 mit gelenkter Vorderachse 8 und einer hinteren Achse 10 sowie eine Fahrerkabine 6 und einen Nutzfahrzeugaufbau 7. An der Heckseite des Lastkraftwagens 2 ist eine übliche Maulkupplung 18 vorhanden, die aus einem Kupplungsmaul 18a und einem hierin beweglich gelagerten Verriegelungsbolzen 18b besteht. Der Verriegelungsbolzen 18b bildet zugleich eine Drehachse 50 für ein Kupplungsauge 108 einer Zugstange 100.

Der erfindungsgemäße Dolly 200 umfasst einen Rahmen 202 mit einer dem Lastkraftwagen 2 zugewandter Vorderseite 214 und einer Rückseite 210. Auf der Oberseite 204 des Rahmens 202 ist eine Sattelkupplungsplatte 212 befestigt. Die Sattelkupplungsplatte 212 ist in üblicher Weise aufgebaut und umfasst eine hier nur schematisch angedeutete Aufnahme für einen Königszapfen eines nicht gezeigten Sattelaufliegers. Diese Aufnahme für einen Königszapfen bildet eine Drehachse 213 für einen gekoppelten Sattelauflieger.

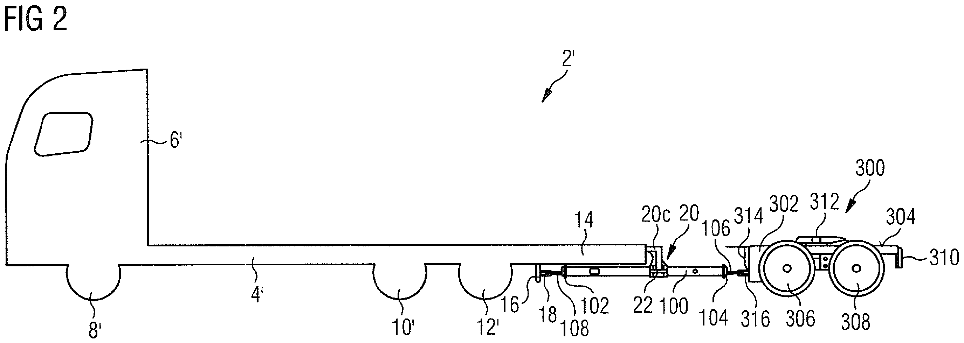

Der in der Fig. 1 schematisch dargestellte Dolly 200 ist ein einachsiger Dolly mit optional Luftgefederter, ungelenkter Starrachse 206. Selbstverständlich ist es auch möglich, dass der Dolly 200 mehrere Starrachsen aufweist, siehe z.B. Fig. 2.

An der Vorderseite 214 des erfindungsgemäßen Dollys 200 ist eine erfindungsgemäße Zugstange 100 drehbeweglich am Dollyrahmen 202 angebracht. Beispielsweise kann eine Zugstange auch teleskopierbar oder verschwenkbar ausgebildet sein. Die Drehbeweglichkeit ist entweder über ein Lager mit senkrechtem Drehzapfen, der im Rahmen integriert ist, gebildet (hier nicht gezeigt), oder, wie in Fig. 1 angedeutet, über eine Kupplungskomponente einer Maulkupplung. In der beispielhaften Ausführungsform gemäß der Fig. 1 ist hierzu ein Kupplungsmaul 220 an der Dollyvorderseite angebracht,. Das Kupplungsmaul 220 ist mit einem Verriegelungsbolzen 222 ausgestattet, der eine Drehachse für ein Kupplungsauge der gekoppelten Zugstange 100 definiert. Folglich ist der Zugstangenkörper am Rahmen 202 über die senkrechte Drehachse am Dollyrahmen 202 dreh- bzw. verschwenkbar gelagert. Die Zugstange 100 ist allerdings nicht, wie im Stand der Technik üblich, über einen Stellmechanismus kontinuierlich mechanisch verstellbar, sondern frei drehbar gelagert.

Am vorderen Ende der Zugstange 100 befindet sich ein hier nicht näher gezeigtes Kupplungsauge, das in gekoppeltem Zustand in dem Kupplungsmaul 18a am Chassis 4 des Lastkraftwagens 2 angeordnet ist. Damit ist die Zugstange 100 am Lastkraftwagen grundsätzlich drehbeweglich gelagert, kann aber Zug- und Druckkräfte übertragen.

Durch eine Führungseinrichtung 500, die später noch näher erläutert wird, ist die Drehbeweglichkeit um die Achse 50 der Maulkupplung 18 im Wesentlichen begrenzt, so dass die Zugstange in Längsrichtung des Lastkraftwagens 2 trotz der lösbaren Kopplung mittels der Maulkupplung 18 drehstarr am Lastkraftwagen 2 angeordnet ist.

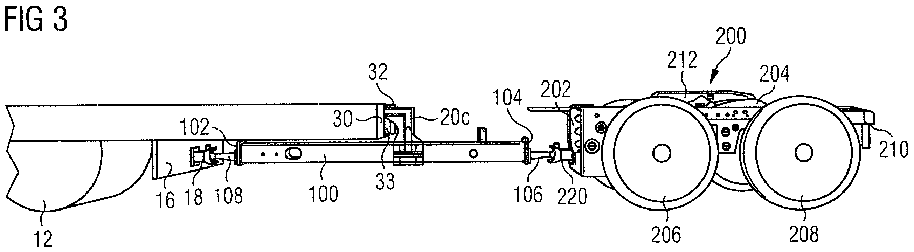

Weitere beispielhafte Ausführungsformen eines Lastwagengespanns 2 sind in den Fig. 2 und 3 gezeigt.

Bei der in Fig. 2 gezeigten beispielhaften Ausführungsform ist der Lastkraftwagen 2' ein schematisch dargestellter Pritschenwagen mit Fahrerkabine 6', gelenkter Vorderachse 8', einem Chassis 4' und zwei Hinterachsen 10', 12'. An der Rückseite 14 ist hier eine nur schematisch dargestellte Aufnahmekammer 33 vorhanden, die sich von der Heckseite vorzugsweise parallel zur Oberfläche der Pritschennutzfläche erstreckt und sich über eine Länge erstreckt, die zur Aufnahme einer Zinke 20c einer Halterung 22 an einer erfindungsgemäßen Zugstange 100 ausreicht. Die Zinke 20c erstreckt sich über eine solche Länge in der Aufnahmekammer 33, dass die Zugstange 100 drehstarr in Längsrichtung des Lastkraftwagens 2' ausgerichtet ist. Unterhalb des heckseitigen Endes 14 befindet sich eine senkrechte Platte 16, an der eine Maulkupplungskomponente einer Maulkupplung 18 in üblicher Weise befestigt ist. Die Maulkupplungskomponente kann entweder ein Kupplungsmaul oder ein Kupplungsauge sein. Üblicherweise handelt es sich um ein Kupplungsmaul, wie es im Markt hinlänglich bekannt ist.

Der in der Fig. 2 gezeigte erfindungsgemäße Dolly 200 umfasst einen Dollyrahmen 302 mit einer Vorderseite 314, die dem Lastkraftwagen 2' zugewandt ist, und einer Heckseite 310. An einer Oberseite 304 des Dollyrahmens 302 ist wiederum eine Sattelkupplungsplatte 312 angebracht, die in üblicher Weise ausgebildet ist, um einen Königszapfen eines nicht gezeigten Sattelaufliegers aufzunehmen.

Der hier schematisch gezeigte Dolly 300 umfasst nunmehr zwei starre Achsen 306 und 308, das heißt nicht gelenkte Starrachsen 306, 308. Optional sind diese Starrachsen 306, 308, wie auch die, wie sie in der Fig. 1 gezeigt sind, luftgefedert.

An der Vorderseite 314 des Rahmens 302 ist eine Maulkupplungskomponente einer Maulkupplung 316 angebracht, nämlich entweder ein Kupplungsauge oder ein Kupplungsmaul, die beide in üblicher Weise gemäß derzeitiger Standards von Maulkupplungen ausgebildet sind. Diese Maulkupplungskomponente dient zum lösbaren Koppeln der Zugstange 100, die am Lastkraftwagen 2 bzw. 2' entweder lösbar über wiederum eine Maulkupplungsverbindung am Lastkraftwagen 2 bzw. 2' angebracht ist, oder nicht lösbar, jedoch in beiden Fällen drehstarr zum Lastkraftwagen 2 bzw. 2'.

Dazu weist die Zugstange 100 an dem zum Dolly 300 zeigenden Ende ein Kupplungsauge 104 auf, eine zur Maulkupplungskomponente des Dollys 300 komplementäre Kupplungskomponente der Maulkupplung 316 auf, wiederum entweder ein Kupplungsauge oder ein übliches Kupplungsmaul 216. Hier ist ein Kupplungsmaul 220 an der Dollyvorderseite angebracht und ein Kupplungsauge 106 an der Zugstange 100 ist in dem Kupplungsmaul 220 verriegelt. Folglich ist die Zugstange 100 lösbar und drehbar am Dolly 300 gekoppelt bzw. koppelbar. Die Zugstange 100 selbst ist über die Halterung 22 mit einem Zinken 20c drehstarr am Lastkraftwagen geführt.

Die in Fig. 3 gezeigte Ausführungsform umfasst einen Dolly 200 gemäß der Erfindung, wie er auch in Fig 1 gezeigt ist, allerdings mit zwei Starrachsen 206, 208 anstatt mit einer wie in Fig. 1. Folglich ist der Dolly 200 an der Vorderseite mit einem Kupplungsmaul 220 ausgestattet. Die Zugstange 100 ist aber nicht wie in Fig. 1 mittels einer Führungseinrichtung 500 drehstarr geführt, sondern über eine Zinke 20c wie in Fig. 2. Die Zinke 20c ist wiederum über eine beispielsweise angeschraubte Halterung an der Zugstange 100 befestigt. Die Zinke 20c erstreckt sich in einen Schlitz 33 zwischen zwei Heckteilen 30, 32 des Lastkraftwagens. Dadurch ist die Zinke 20c in Längsrichtung geführt und folglich kann sich die Zugstange 100 trotz der Kopplung über ein Kupplungsauge 108 in dem Kupplungsmaul der Maulkupplung am Lastkraftwagen gegenüber dem Lastkraftwagen nicht drehen.

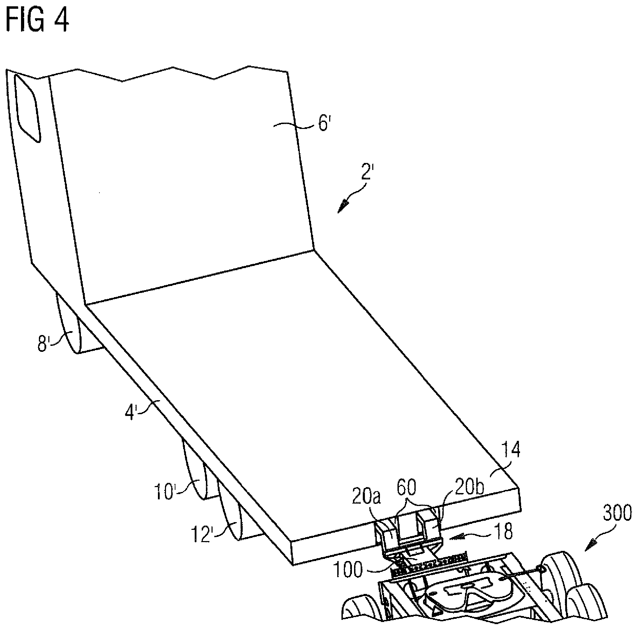

Bei der in Fig. 4 gezeigten Ausführungsform weist die Halterung 20 zwei Zinken 20a und 20b auf, die in die am Lastkraftwagen 2' oftmals vorhandenen Aufnahmekammern 60 hineinragen, und eine drehfeste Verbindung in Kombination mit der Zugkraftkopplung über die Maulkupplung 18 am Lastkraftwagen 2 bzw. 2' schafft. Die Aufnahmekammern 60 sind oftmals an einem Lastkraftwagen vorhanden, um Zinken eines Mitnahmestaplers aufzunehmen. Erstmals wird diesen Aufnahmekammern 60 somit gemäß der Erfindung eine zusätzliche Funktion zugeordnet.

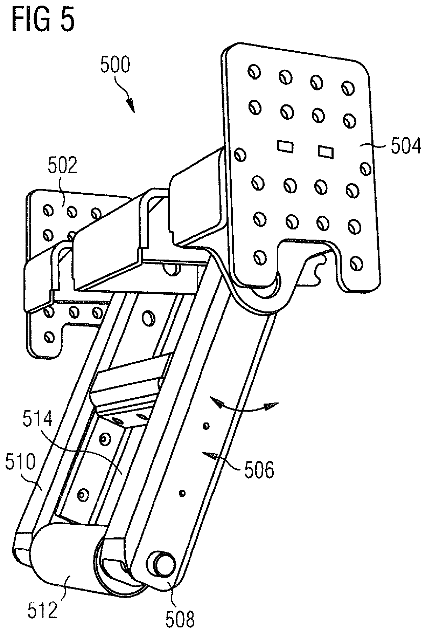

Eine weitere alternative Ausführungsform für eine Führungseinrichtung für die Zugstange 100 ist in der Fig. 5 gezeigt. Hier umfasst die Führungseinrichtung 500 eine erste Seitenplatte 502 und eine davon beabstandete Seitenplatte 504, zwischen denen eine drehbar gelagerte Halterung 506 angeordnet ist. Die Führungseinrichtung 500 ist mittels der Seitenplatten 502, 504 in einem unteren Teil des Chassis des Lastkraftwagens 2 bzw. 2' zu befestigen. Am unteren Ende der drehbar gelagerten Halterung 506 befindet sich eine Rolle 512, die zusammen mit den Seitenteilen 508 und 510 eine Öffnung 514 begrenzt. Diese Öffnung 514 ist derart groß ausgebildet, dass die Zugstange 100 hier hindurch geführt werden kann, wenn das Teil 506 senkrecht nach unten geklappt ist. Die Seitenteile 508, 510 sind dabei so beabstandet, dass die Zugstange in gekoppeltem Zustand am Lastkraftwagen 2, bzw. 2' drehstarr in Bezug auf eine vertikale Achse geführt ist.

Durch die drehbar gelagerte Rolle 512 ist das Einführen der Zugstange 100 zum Koppeln mit dem Lastkraftwagen 2 bzw. 2' vereinfacht, da die Reibung beim Einführen der Zugstange 100 vermindert ist. Selbstverständlich ist es aber grundsätzlich auch möglich, anstatt der Rolle 512 eine nicht drehbare Walze oder einfach ein unteres Begrenzungsteil vorzusehen. Für den Fall, dass keine Zugstange 100 zu lagern ist, kann die Halterung 506 um 90° nach oben geklappt werden und in dieser Lage durch einen hier nicht gezeigten Sicherungsmechanismus wie ein Bolzen oder ein Sicherungsstift in seiner Außerbetriebsstellung gehaltert sein. Die Rolle 512 kann aber auch demontierbar gelagert sein. In diesem Fall wird die Halterung 506 ohne die Rolle über die bereits gekoppelte Zugstange nach unten geklappt. Hiernach wird die Rolle 512 wieder monitert und bildet das Auflager für die darauf liegende Zugstange im Fahrbetrieb.

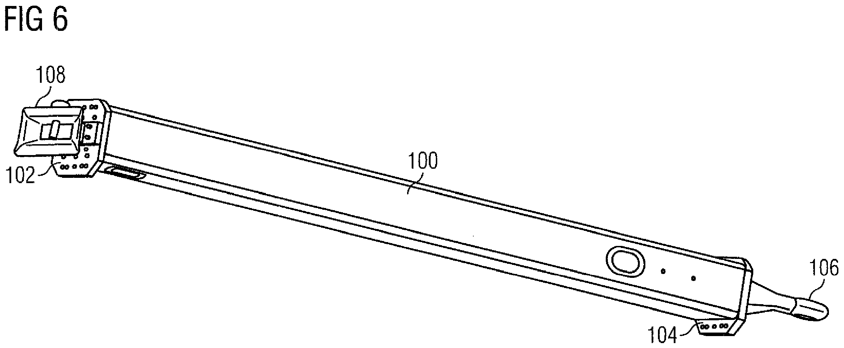

Eine weitere beispielhafte Ausführungsform einer erfindungsgemäßen Zugstange 100 ist in der Fig. 6 gezeigt. Hier ist an dem zum Dolly zugewandten Ende 104 ein Kupplungsauge 106 angebracht, beispielsweise angeschraubt. An dem gegenüberliegenden Ende 102 der Zugstange 100 ist ein Kupplungsmaul 108 angebracht, wiederum insbesondere geschraubt. Diese Zugstange kann beispielsweise mit der Führungseinrichtung 500 kombiniert eingesetzt werden, wie es z.B. in der Fig. 1 gezeigt ist. Anstatt dem in Fig. 6 gezeigten Kupplungsmaul 108 ist in der Fig. 1 allerdings ein Kupplungsauge an dem Ende 102 angeschraubt.

Die in Fig. 6 gezeigte Zugstange 100 könnte aber auch mit der Führungseinrichtung in Form der Halterung 22 und der Zinke 20c, siehe Fig. 2, kombiniert eingesetzt werden. Selbstverständlich wäre eine solche Zugstange 100 aber auch mit den Zinken 20a und 20b ausrüstbar, siehe Fig. 4.

### Gewerbliche Anwendbarkeit

Im Betrieb wird gemäß der vorliegenden Erfindung wird z.B. eine Zugstange 100, wie sie in der Fig. 2 oder 4 gezeigt ist, per Hand oder mit Hilfe eines Gabelstaplers angehoben und mit dem an der Vorderseite befindlichen Kupplungsauge 108 in das entsprechende Kupplungsmaul 18 des Lastkraftwagens 2' eingeführt und verriegelt. Bei diesem Kopplungsvorgang werden gleichzeitig die Zinken 20a , 20b der Führungseinrichtung der Zugstange 100 in die entsprechenden Aufnahmekammern 60 im Lastkraftwagen 2' eingeführt. Durch die Zug- und Druckkräfteübertragung leistende Maulkupplungsverbindung mit dem Lastkraftwagen 2' in Kombination mit den in den Aufnahmekammern 60 eingesteckten Zinken 20a, 20b ist die Zugstange drehstarr in Längsrichtung über das Heck des Lastkraftwagens 2' hinausstehend sicher gehalten.

Der Lastkraftwagen kann nun an den Dolly 300 herangefahren werden, bis das Kupplungsauge 106 an der Zugstange 100 in das entsprechende Kupplungsmaul 316 des Dollys 300 eingefahren und verriegelt ist. Somit ist der Dolly nunmehr über die Maulkupplungsverbindung 106, 316 drehbar mit dem Lastkraftwagen 2' verbunden, allerdings mit drehstarrer Zugstange 100.

Dieses Zuggespann kann nun in üblicher Weise derart rangiert werden, dass ein Königszapfen eines Sattelaufliegers in die Aufnahme der Sattelplatte 312 eingefahren und verriegelt wird. Das nunmehr aus dem Lastkraftwagen 2, dem Dolly 300 und dem Sattelauflieger gebildete Zuggespann ist nun in der Lage, einen BO-Kraftkreis zu durchfahren, weil die Zugstange 100 drehstarr am Zugfahrzeug 2' gelagert ist, der Dolly 300 aber über die Maulkupplungsverbindung drehbar ist. Erst diese Kombination von drehstarrer Zugstange 100 am Zugfahrzeug 2' und frei drehbarem Dolly 300 an der Zugstange 100 ermöglicht diese Gelenkigkeit, ohne das die Achsen des Dolly lenkbar sind oder der Winkel der Deichsel des Dollys bei einer Kurvenfahrt über eine Stelleinheit kontinuierlich verstellt werden muss.

Es ist auch denkbar, dass die Zugstange 100 zuerst am Lastkraftwagen 2 bzw. 2' gekoppelt wird. Zur Erzielung der Drehstarrheit der Zugstange 100 wird die Halterung 20 an der Zugstange 100 angeschraubt und die eine Zinke 20c oder die mehreren Zinken 20a und 20b in den Schlitz 33 bzw. die Aufnahmekammer 60 eingeschoben. Sodann wird durch Rangieren des Lastkraftwagens mit daran gekoppelter, drehstarr geführter Zugstange 100 der Dolly 200 bzw. 300 mit der Zugstange 100 über die Maulkupplung gekoppelt.

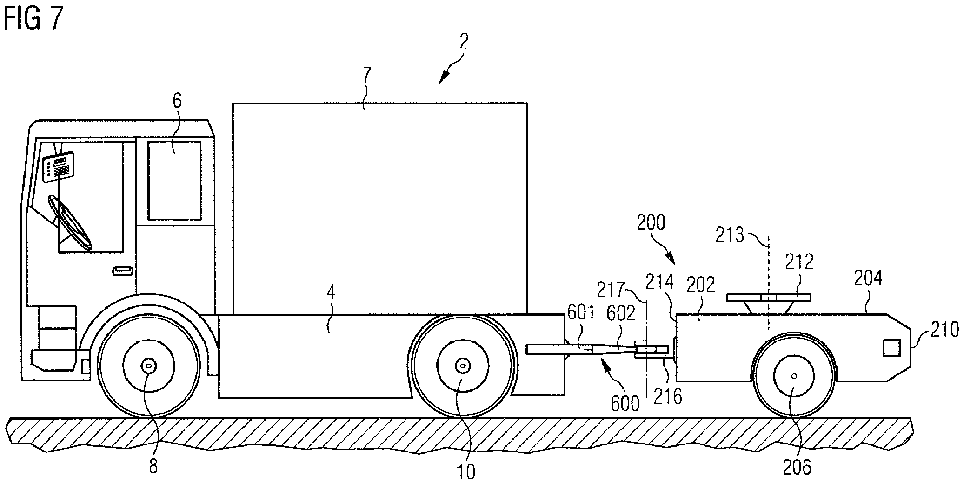

In der Fig. 7 ist eine beispielhafte Ausführungsform gezeigt, die im Wesentlichen der, wie sie in der Fig. 1 gezeigt ist, entspricht. Allerdings ist die Zugstange 600 hier am Lastkraftwagen starr angeschweißt. Die Zugstange 600 selbst besteht hier aus zwei Teilen 601, 602. Das Teil 602 ist steckbar oder verschwenkbar am Teil 601 befestigt. An dem dem Dolly 200 zugewandten Ende ist wiederum ein Kupplungsauge angeordnet, damit die Zugstange 600 lösbar mit dem Dolly 200 koppelbar ist.

## Patentansprüche

1. Untersetzachse (200; 300) mit:
- einem Rahmen (202; 302), der eine zu einem Zugfahrzeug (2; 2') gerichtete Vorderseite (214; 314) und eine Oberseite (204; 304) aufweist;
- einer auf der Oberseite (204; 304) angeordneten Sattelkupplungsplatte (212; 312) einer Sattelkupplung zum lösbaren Koppeln eines Sattelaufliegers;
- mindestens einer nicht lenkbar am Rahmen (202; 302) angeordneten Starrachse (206; 208; 306, 308);
**gekennzeichnet durch**
eine an der Vorderseite (214; 314) des Rahmens (202; 302) um eine vertikale Achse drehbar gelagerte Zugstange (100), die an der zum Koppeln mit einem Zugfahrzeug (2; 2') bestimmten Seite eine Führungseinrichtung (20; 20C; 500) aufweist, die zum Erzielen einer drehstarren Kopplung mit dem Zugfahrzeug (2; 2') ausgebildet ist.

2. Untersetzachse (200; 300) nach Anspruch 1, wobei die Zugstange (100) von solch einer Bauart ist, die nur mit Werkzeug vom Rahmen (202; 302) demontierbar ist.

3. Untersetzachse (200; 300) mit:
- einem Rahmen (202; 302), der eine zu einem Zugfahrzeug (2; 2') gerichtete Vorderseite (214; 314) und eine Oberseite (204; 304) aufweist;
- einer auf der Oberseite (204; 304) angeordneten Sattelkupplungsplatte (212; 312) einer Sattelkupplung zum lösbaren Koppeln eines Sattelaufliegers;
- mindestens einer starr, nicht lenkbar am Rahmen (202; 302) angeordneten Starrachse (206; 306; 308); und
- einer an der Vorderseite des Rahmens (214; 314) angeordneten Kupplungskomponente einer Maulkupplung (220), wobei diese Kupplungskomponente in Verbindung mit einem an einer Zugstange (100) befindlichen komplementären Kupplungskomponente eine vertikale Drehachse für die Zugstange (100) an der Untersetzachse (200; 300) bereitstellt.

4. Untersetzachse (200; 300) nach einem der voranstehenden Ansprüche, bei der:
- der Abstand (l₁) zwischen dem Mittelpunkt der Starrachsen (206; 208; 306; 308) und der Kupplungskomponente an der Vorderseite des Dollyrahmens (214; 314) zwischen 500 mm und 2.500 mm, insbesondere 800 mm bis 1.500 mm, oder weiter insbesondere 900 mm bis 1.300 mm beträgt,
und/oder
- der Abstand (l₂) zwischen der Sattelkupplungsplatte (212; 312) auf der Oberseite (204; 304) des Rahmens (202; 302) und der Kupplungskomponente an der Vorderseite (214; 314) des Rahmens (202; 302) zwischen 500 mm und 2.500 mm, insbesondere 800 mm bis 1.500 mm, oder weiter insbesondere 900 mm bis 1.300 mm beträgt.

5. Untersetzachse (200; 300) nach einem der voranstehenden Ansprüche, ferner mit einer Feststelleinrichtung, die derart ausgebildet ist, dass eine Zugstange (100), die mit dem am Rahmen (202; 302) der Untersetzachse (200; 300) angeordneten Kupplungskomponente der Maulkupplung (220) eingekoppelt ist, in Bezug auf eine vertikale Achse wahlweise drehstarr zum Rahmen (202; 302) der Untersetzachse (200; 300) festlegbar ist.

6. Untersetzachse (200; 300) nach Anspruch 5, bei der die Feststelleinrichtung mindestens eine Stange umfasst, die wenigstens mit der Zugstange (100) oder mit dem Rahmen (202; 302) der Untersetzachse (200; 300) lösbar verbindbar ist.

7. Zugstange (100) zum lösbaren Koppeln einer Untersetzachse (200; 300) nach einem der Ansprüche 2-5 mit einem Zugfahrzeug (2; 2'), mit:
- einem länglichen Zugstangenkörper, der eine zum Zugfahrzeug (2; 2') zu richtende Vorderseite und eine zur Untersetzachse (200; 300) zu richtende Rückseite aufweist;
- einer an der Vorderseite (102) des Zugstangenkörpers angeordneten Kupplungskomponente (108) einer Maulkupplung; und
- einer an der Rückseite (104) des Zugstangenkörpers angeordneten Kupplungskomponente (106) einer Maulkupplung, die eine vertikale Drehachse für die Zugstange (100) an der Untersetzachse (200; 300) bereitstellt, um die Zugstange (100) an der Vorderseite (214; 314) des Rahmens (202; 302) der Untersetzachse (200; 300) um die vertikale Achse drehbar und lösbar zu lagern.

8. Zugstange (100) nach Anspruch 7, ferner mit einer an der Vorderseite (102) des Zugstangenkörpers angeordneten Führungseinrichtung (20), die derart ausgebildet ist, dass die Zugstange (100) an einem Chassis (4) eines Zugfahrzeugs (2; 2') in Bezug auf eine Vertikalachse starr geführt ist.

9. Zugstange (100) nach Anspruch 7 oder 8, bei der die am Zugstangenkörper angeordneten Kupplungskomponenten (106, 108) ein Kupplungsauge und/oder ein Kupplungsmaul sind.

10. Zugfahrzeug (2; 2') mit:
- einem Chassis (4; 4'), das eine Vorderseite und eine Heckseite aufweist;
- einer heckseitig, in Bezug auf eine vertikale Achse starr angeordneten Zugstange (100) mit einem länglichen Zugstangenkörper, der eine zum Zugfahrzeug (2; 2') gerichtete Vorderseite und eine zur Untersetzachse (200; 300) zu richtende Rückseite aufweist, und mit einer an der Rückseite (104) des Zugstangenkörpers angeordneten Kupplungskomponente (106) einer Maulkupplung, die eine vertikale Drehachse für die Zugstange (100) an der Untersetzachse (200; 300) bereitstellt.

11. Zugfahrzeug (2; 2') nach Anspruch 10, ferner mit:
- einer an der Vorderseite (102) des Zugstangenkörpers angeordneten Kupplungskomponente (108) einer Maulkupplung.

12. Zugfahrzeug (2; 2') nach Anspruch 10, ferner mit:
- einer heckseitig am Chassis (4) angeordneten Kupplungskomponente (18) einer Maulkupplung; und
- einer Führungseinrichtung (20; 500), die derart ausgebildet ist, dass die in die Kupplungskomponente (18) der Maulkupplung gekoppelte Zugstange (100) in Bezug auf eine vertikale Achse drehstarr geführt ist.

13. Zugfahrzeug (2; 2') nach Anspruch 12, bei der die Führungseinrichtung (500) einen am Chassis (4) zwischen einer Betriebsstellung und einer Außerbetriebsstellung bewegbaren Rahmen (506) umfasst, durch den sich in der Betriebsstellung die Zugstange (100) erstreckt und, wenn die Zugstange (100) mit der Maulkupplungskomponente (18) am Zugfahrzeugchassis (4) gekoppelt ist, drehstarr geführt ist.

14. Zugfahrzeug (2; 2') nach Anspruch 12, bei der die Führungseinrichtung (20; 500) mindestens einen sich in Längsrichtung des Zugfahrzeugs (2) erstreckenden Schlitz (33) oder mindestens eine Aufnahmekammer (60) umfasst, in den eine komplementär ausgebildeter Zinke (20c, 20a, 20b) an der Zugstange (100) in gekoppeltem Zustand der Zugstange (100) eingeführt ist, so dass die Zugstange (100) dann drehstarr zum Zugfahrzeug (2;2') geführt ist.

15. Zugfahrzeug (2; 2') mit:
- einem Chassis (4; 4'), das eine Vorderseite und eine Heckseite aufweist;
- einer heckseitig am Chassis (4) angeordneten Kupplungskomponente (18) einer Maulkupplung; und
- einer an der Heckseite befindliche Führungseinrichtung (500), die einen am Chassis (4) zwischen einer Betriebsstellung und einer Außerbetriebsstellung bewegbaren Rahmen (506) umfasst, durch den sich in der Betriebsstellung eine Zugstange (100) erstreckt und, wenn die Zugstange (100) mit der Maulkupplungskomponente (18) am Zugfahrzeugchassis (4) gekoppelt ist, drehstarr geführt ist.

## Claims

1. A dolly axle (200; 300) comprising:
- a frame (202; 302) having a front side (214; 314) directed towards a towing vehicle (2; 2'), and an upper side (204; 304);
- a fifth-wheel coupling plate (212; 312) of a fifth-wheel coupling arranged on the upper side (204; 304) for detachably coupling a semitrailer;
- at least one rigid axle (206; 208; 306, 308) non-steerably arranged on the frame (202; 302);
**characterized by**
- a towbar (100) rotatably supported about a vertical axis on the front side (214; 314) of the frame (202; 302), said towbar being provided with a guiding device (20; 20C; 500) on the side intended for coupling with a towing vehicle (2; 2'), which is formed for achieving torsionally stiff coupling with the towing vehicle (2; 2').

2. The dolly axle (200; 300) according to claim 1, wherein the towbar (100) is of a type, which can only be removed from the frame (202; 302) by means of a tool.

3. A dolly axle (200; 300) comprising:
- a frame (202; 302) having a front side (214; 314) directed towards a towing vehicle (2; 2'), and an upper side (204; 304);
- a fifth-wheel coupling plate (212; 312) of a fifth-wheel coupling arranged on the upper side (204; 304) for detachably coupling a semitrailer;
- at least one rigid axle (206; 306; 308) rigidly and non-steerably arranged on the frame (202; 302); and
- a coupling component of an towing hitch (220) arranged on the front side of the frame (214; 314), said coupling component, in conjunction with a complementary coupling component located on the towbar (100), providing a vertical axis of rotation for the towbar (100) on the dolly axle (200; 300).

4. The dolly axle (200; 300) according to one of the preceding claims, wherein
- the distance (l₁) between the center of the rigid axles (206; 208; 306; 308) and the coupling component on the front side of the dolly frame (214; 314) is between 500 mm and 2,500 mm, particularly 800 mm to 1,500 mm, or more particularly 900 mm to 1,300 mm,
and/or
- the distance (l₂) between the fifth-wheel coupling plate (212; 312) on the upper side (204; 304) of the frame (202; 302) and the coupling component on the front side (214; 314) of the frame (202; 302) is between 500 mm and 2,500 mm, particularly 800 mm to 1,500 mm, or more particularly 900 mm to 1,300 mm.

5. The dolly axle (200; 300) according to one of the preceding claims, further comprising a locking device, which is formed such that a towbar (100) coupled into the coupling component of the towing hitch (220), which is arranged on the frame (202; 302) of the dolly axle, can be optionally fixed, in relation to a vertical axis, in a torsionally stiff manner with regard to the frame (202; 302) of the dolly axle (200; 300).

6. The dolly axle (200; 300) according to claim 5, wherein the locking device comprises at least one bar, which can be detachably connected with at least the towbar (100) or the frame (202; 302) of the dolly axle (200; 300).

7. A towbar (100) for detachably coupling a dolly axle (200; 300) according to one of claims 2-5 to a towing vehicle (2; 2'), comprising:
- an elongate towbar body having a front side to be directed to the towing vehicle (2; 2') and a rear side to be directed to the dolly axle (200; 300);
- a coupling component (108) of a towing hitch, which is arranged on the front side (102) of the towbar body; and
- a coupling component (106) of a towing hitch, which coupling component is arranged on the rear side (104) of the towbar body and provides a vertical axis of rotation for the towbar (100) on the dolly axle (200; 300), in order to rotatably and detachably support the towbar (100) around the vertical axis on the front side (214; 314) of the frame (202; 302) of the dolly axle (200; 300).

8. The towbar (100) according to claim 7, further comprising a guiding device (20) arranged on the front side (102) of the towbar body, which guiding device is formed such that the towbar (100) is stiffly guided on a chassis (4) of a towing vehicle (2; 2') with regard to a vertical axis.

9. The towbar (100) according to claim 7 or 8, wherein the coupling components (106, 108) arranged on the towbar are a towing eye and/or a coupling jaw.

10. A towing vehicle (2; 2') comprising:
- a chassis (4; 4') having a front side and a rear side;
- a towbar (100), which is arranged on the rear side and stiff with regard to a vertical axis, and comprises an elongate towbar body having a front side directed towards the towing vehicle and a rear side to be directed toward the dolly axle (200; 300), and a coupling component (106) of an towing hitch arranged on the rear side (104) of the towbar body, which provides a vertical axis of rotation for the towbar (100) on the dolly axle (200; 300).

11. The towing vehicle (2; 2') according to claim 10, further comprising:
- a coupling component (108) of an towing hitch, which coupling component is arranged on the front side (102) of the towbar body.

12. The towing vehicle (2; 2') according to claim 10, further comprising:
- a coupling component (18) of an towing hitch, which coupling component is arranged on the rear side of the chassis (4); and
- a guiding device (20; 500), which is formed such that the towbar (100) coupled into the coupling component (18) of the towing hitch is guided in a torsionally stiff manner with regard to the vertical axis.

13. The towing vehicle (2; 2') according to claim 12, wherein the guiding device (500) comprises a frame (506) movable along the chassis (4) between an operational position and an inoperative position, through which frame the towbar (100) extends in the operational position, and by means of which the towbar (100) is guided in a torsionally stiff manner when attached to the towing vehicle chassis (4) by means of the towing hitch component (18).

14. The towing vehicle (2; 2') according to claim 12, wherein the guiding device (20; 500) comprises at least one slot (33) extending in the longitudinal direction of the vehicle (2), or at least one receiving chamber (60), into which a complementary formed tine (20c, 20a, 20b) on the towbar (100) is inserted in the coupled state of the towbar (100), such that the towbar (100) is then guided in a torsionally stiff manner with regard to the towing vehicle (2; 2').

15. A towing vehicle (2; 2') comprising:
- a chassis (4; 4') having a front side and a rear side;
- a coupling component (18) of an towing hitch, which coupling component is arranged on the rear side of the chassis (4); and
- a guiding device (500) located on the rear side, which guiding device comprises a frame (506) that is movable along the chassis (4) between an operational position and an inoperative position, through which frame a towbar (100) extends in the operational position, and by means of which the towbar is guided in a torsionally stiff manner when the towbar (100) is coupled to the towing vehicle chassis (4) via the towing hitch component (18).

## Revendications

1. Diabolo (200 ; 300) avec :
- un cadre (202 ; 302), qui présente une face avant (214 ; 314) dirigée vers un véhicule tracteur (2 ; 2') et une face supérieure (204 ; 304) ;
- une plaque de sellette d'attelage (212 ; 312) d'une sellette d'attelage disposée sur la face supérieure (204 ; 304) pour l'accouplement amovible d'une semi-remorque ;
- au moins un essieu rigide (206 ; 208 ; 306 ; 308) non orientable disposé sur le cadre (202 ; 302) ;
**caractérisé par**
- une barre d'attelage (100) montée sur la face avant (214 ; 314) du cadre (202 ; 302) de manière à pouvoir pivoter autour d'un axe vertical, qui, sur la face destinée à l'accouplement avec un véhicule tracteur (2 ; 2') présente un dispositif de guidage (20 ; 20C ; 500), qui est réalisé pour obtenir un accouplement rigide à la torsion avec le véhicule tracteur (2 ; 2').

2. Diabolo (200 ; 300) selon la revendication 1, dans lequel la barre d'attelage (100) est conçue de telle manière qu'elle peut seulement être démontée du cadre (202 ; 302) avec un outil.

3. Diabolo (200 ; 300) avec :
- un cadre (202 ; 302), qui présente une face avant (214 ; 314) dirigée vers un véhicule tracteur (2 ; 2') et une face supérieure (204 ; 304) ;
- une plaque de sellette d'attelage (212 ; 312) d'une sellette d'attelage disposée sur la face supérieure (204 ; 304) pour l'accouplement amovible d'une semi-remorque ;
- au moins un essieu rigide (206 ; 208 ; 306 ; 308) rigide, non orientable, disposé sur le cadre (202 ; 302) ; et
- un composant d'accouplement à fourche (220) disposé sur la face avant du cadre (214 ; 314), dans lequel ce composant d'accouplement fournit, en liaison avec un composant d'accouplement complémentaire se trouvant sur une barre d'attelage (100), un axe de rotation vertical pour la barre d'attelage (100) sur le diabolo (200 ; 300).

4. Diabolo (200 ; 300) selon l'une quelconque des revendications précédentes, dans lequel :
- l'écart (l₁) entre le centre des axes rigides (206 ; 208 ; 306 ; 308) et le composant d'accouplement sur la face avant du cadre du diabolo (214 ; 314) est de 500 mm à 2 500 mm, en particulier de 800 mm à 1 500 mm, ou encore en particulier de 900 mm à 1 300 mm,
et/ou
- l'écart (l₂) entre la plaque de sellette d'attelage (212 ; 312) sur la face supérieure (204 ; 304) du cadre (202 ; 302) et le composant d'accouplement sur la face avant (214 ; 314) du cadre (202 ; 302) est de 500 mm à 2 500 mm, en particulier de 800 mm à 1 500 mm, ou encore de 900 mm à 1 300 mm.

5. Diabolo (200 ; 300) selon l'une quelconque des revendications précédentes, doté en outre d'un dispositif de blocage, qui est réalisé de telle manière qu'une barre d'attelage (100), qui est accouplée au composant d'accouplement de l'accouplement à fourche (220) disposé sur le cadre (202 ; 302) du diabolo (200 ; 300), peut, par rapport à un axe vertical, être bloquée sélectivement de manière rigide à la torsion par rapport au cadre (202 ; 302) du diabolo (200 ; 300).

6. Diabolo (200 ; 300) selon la revendication 5, dans lequel le dispositif de blocage comprend au moins une barre, qui peut être reliée de manière amovible au moins à la barre d'attelage (100) ou au cadre (2020 ; 302) du diabolo (200 ; 300).

7. Barre d'attelage (100) pour accoupler de manière amovible un diabolo (200 ; 300) selon l'une quelconque des revendications 2 à 5 à un véhicule tracteur (2 ; 2'), avec :
- un corps de barre oblong, qui présente une face avant à orienter vers le véhicule tracteur (2 ; 2') et une face arrière à orienter vers le diabolo (200 ; 300) ;
- un composant d'accouplement (108) d'un accouplement à fourche disposé sur la face avant (102) du corps de barre de traction ; et
- un composant d'accouplement (106) d'un accouplement à fourche disposé sur la face arrière (104) du corps de barre d'attelage, qui fournit un axe de rotation vertical pour la barre d'attelage (100) sur le diabolo (200 ; 300), pour loger la barre d'attelage (100) sur la face avant (214; 314) du cadre (202 ; 302) du diabolo (200 ; 300) de façon qu'elle puisse pivoter et être détachée.

8. Barre d'attelage (100) selon la revendication 7, avec en outre un dispositif de guidage (20) disposé sur la face avant (102) du corps de barre d'attelage, qui est réalisée de telle manière que la barre d'attelage (100) est guidée de façon rigide sur un châssis (4) d'un véhicule tracteur (2 ; 2') par rapport à un axe vertical.

9. Barre d'attelage (100) selon la revendication 7 ou 8, dans laquelle les composants d'accouplement (106 ; 108) disposés sur le corps de barre d'attelage sont un œillet d'accouplement et/ou une fourche d'accouplement.

10. Véhicule tracteur (2 ; 2') avec :
- un châssis (4 ; 4'), qui présente une face avant et une face arrière ;
- une barre d'attelage (100) à l'arrière, disposée de manière rigide par rapport à un axe vertical avec un corps de barre d'attelage oblong, qui présente une face avant dirigée vers le véhicule tracteur (2 ; 2'), et une face arrière dirigée vers le diabolo (200 ; 300), et avec un composant d'accouplement (106) d'un accouplement à fourche disposé sur la face arrière (104) du corps de barre d'attelage, qui fournit un axe de rotation vertical pour la barre d'attelage (100) sur le diabolo (200 ; 300).

11. Véhicule tracteur (2 ; 2') selon la revendication 10, en outre avec :
- un composant d'accouplement (108) d'un accouplement à fourche disposé sur la face avant (102) du corps de barre d'attelage.

12. Véhicule tracteur (2 ; 2') selon la revendication 10, en outre avec :
- un composant d'accouplement (18) d'un accouplement à fourche disposé sur la face arrière sur le châssis (4) ; et
- un dispositif de guide (20 ; 500), qui est réalisé de telle manière que la barre d'attelage (100) accouplée dans le composant d'accouplement (18) de l'accouplement à fourche est guidé de manière rigide à la torsion par rapport à un axe vertical.

13. Véhicule tracteur (2 ; 2') selon la revendication 12, dans lequel le dispositif de guidage (500) comprend sur le châssis (4) un cadre mobile (506) entre une position de service et une position hors service, par lequel la barre d'attelage (100) s'étend en position de service et qui est guidée de manière rigide à la torsion, lorsque la barre d'attelage (100) est accouplée au composant d'accouplement à fourche (18) sur le châssis du véhicule tracteur (4).

14. Véhicule tracteur (2 ; 2') selon la revendication 12, dans lequel le dispositif de guidage (20 ; 500) comprend au moins une fente (33) s'étendant dans la direction longitudinale du véhicule tracteur (2) ou au moins une chambre de logement (6) dans laquelle une griffe réalisée en complément (20c ; 20a ; 20b) sur la barre d'attelage (100) est introduite à l'état accouplé de la barre d'attelage (100), si bien que la barre d'attelage (100) est guidée de manière rigide à la torsion vers le véhicule tracteur (2 ; 2').

15. Véhicule tracteur (2 ; 2') avec :
- un châssis (4 ; 4'), qui présente une face avant et une face arrière ;
- un composant d'accouplement (18) d'un accouplement à fourche disposé à l'arrière du châssis (4) ; et
- un dispositif de guidage (500), qui comprend un cadre mobile (506) entre une position de service et une position hors service, par lequel la barre d'attelage (100) s'étend en position de service et qui est guidée de manière rigide à la torsion, lorsque la barre d'attelage (100) est accouplée au composant d'accouplement à fourche (18) sur le châssis du véhicule tracteur (4).
